# EUROPÄISCHE PATENTSCHRIFT

(11) **EP 0 529 238 B1**
(45) Veröffentlichungstag und Bekanntmachung des Hinweises auf die Patenterteilung: **26.04.1995**
(21) Anmeldenummer: 92111112.6
(22) Anmeldetag: 01.07.1992
(51) Int. Cl.: B23B 51/00, B23Q 1/25

(54) **Vorrichtung zur Herstellung von Bohrlöchern mit Hinterschneidung**
Device for making drilled holes with undercutting
Dispositif de fabrication de trous forés avec chambrage

(30) Priorität: 22.08.1991 DE 4127745
(43) Veröffentlichungstag der Anmeldung: 03.03.1993
(73) Patentinhaber: fischerwerke Artur Fischer GmbH & Co. KG, D-72178 Waldachtal (DE)
(72) Erfinder: Lind, Stefan, Dipl.-Ing. (FH), W-7244 Tumlingen (DE)

(56) Entgegenhaltungen:
- EP-A- 0 484 647
- DE-A- 1 448 549
- DE-A- 3 222 159
- DE-A- 3 239 192
- US-A- 2 823 591

## Beschreibung

Die Erfindung betrifft eine Vorrichtung zur Herstellung von Bohrlöchern mit Hinterschneidung, insbesondere in Fassadenplatten, gemäß der Gattung des Anspruches 1.

Zur Herstellung von Bohrlöchern mit Hinterschneidung ist aus der EP 0 044 386 A1 eine Vorrichtung bekannt, die eine mit einer kalottenförmigen Mulde versehene Lagerbuchse aufweist, in der ein mit einem Bund versehenes Bohrwerkzeug abgestützt und verschwenkbar gelagert ist. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Aus der EP 0 442 104 A2 ist eine Vorrichtung nach dem Oberbegriff des Anspruchs 1 bekannt, mit der in Fassadenplatten oder dgl. Bohrlöcher mit Hinterschneidung eingebracht werden können. In Fassadenplatten müssen die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine Hinterschneidung herzustellen, werden bei der bekannten Vorrichtung Bohrwerkzeuge verwendet, die einen mit Diamantsplitter bestückten Bohrkopf aufweisen. Zur Herstellung der Hinterschneidung wird die Werkzeugachse von Hand ausgelenkt und durch eine kreisförmige Bewegung die Hinterschneidung im Bereich des Bohrlochgrundes ausgerieben. Die Ausreibung der Hinterschneidung von Hand erhöht zum einen die Bruchgefahr der schlag- und stoßempfindlichen Bohrwerkzeuge und führt zum anderen zu Ungenauigkeiten in der Ausführung der Hinterschneidung.

Der Erfindung liegt daher die Aufgabe zugrunde, eine Vorrichtung zur Herstellung von Bohrlöchern mit Hinterschneidung, insbesondere für Fassadenplatten, zu schaffen, die die Herstellung eines genauen, auf den Spreizdübel abgestimmten Bohrloches durch automatisches und kontrolliertes Ausschwenken ermöglicht.

Die Lösung dieser Aufgabe wird durch die im Anspruch 1 angegebenen Merkmale erreicht. Die konzentrisch um die Mittelachse der Führungshülse angeordneten Zylinder werden nacheinander im oder gegen den Uhrzeigersinn angesteuert, so daß die an der Bohrmaschine befestigte Taumelscheibe aus ihrer waagrechten Position in eine Schräglage gedrückt wird. Diese Schräglage verschiebt sich entsprechend der jeweils ausgefahrenen Kolbenstange der Zylinder kreisförmig um die Mittelachse, so daß eine Taumelbewegung entsteht. Bei dieser Taumelbewegung wird die Werkzeugachse in ausgelenktem Zustand zwangsweise kreisförmig um seine Mittelachse bewegt und damit die Hinterschneidung im Bohrloch ausgerieben. Durch das in der Halterung angeordnete Schwenklager ist die Schwenkachse bei der Taumelbewegung exakt fixiert.

Durch das automatische Ausschwenken der Werkzeugachse und durch die maschinengesteuerte Taumelbewegung der Bohrmaschine werden Fehlermöglichkeiten bei der Ausreibung der Hinterschneidung durch zu geringe Auslenkung oder einer unvollständigen Kreisbewegung vermieden. Die Vorrichtung eignet sich daher für die Serienerstellung von hinterschnittenen Bohrlöchern, insbesondere für den Einsatz von Befestigungselementen für die verdeckte Montage von Fassadenplatten.

Weitere vorteilhatte Ausgestaltungen der Erfindung ergeben sich aus den Unteransprüchen. Die Verbindung der Kolbenstange mit der Taumelscheibe über ein Pendelgelenk vermeidet ein Verklemmen und Verkanten der Vorrichtung und einen erhöhten Verschleiß der Zylinder. Die Gleichmäßigkeit der Taumelbewegung wird beeinflußt von der Anzahl der Zylinder. Je gleichmäßiger die Taumelbewegung ausgeführt wird, desto günstiger wirkt sich dies auf den Verschleiß des Bohrwerkzeuges aus. Es empfiehlt sich daher, wenigstens sechs gleichmäßig konzentrisch um die Führungshülse verteilte Zylinder für die Erzeugung der Taumelbewegung zu verwenden.

Es hat sich ferner als Zweckmäßig erwiesen, die Schräglage der Taumelscheibe durch die Anordnung von Anschlägen zu begrenzen, die ebenfalls konzentrisch um die Mittelachse der Führungshülse und vorzugsweise in gleicher Anzahl wie die Zylinder auf der Haltetung angeordnet sind. Um die Anschläge verstellen zu können, sind diese als Gewindebolzen ausgebildet, auf denen jeweils eine mit einer gerundeten Stirnseite versehene Gewindehülse aufgeschraubt ist.

Die Erfindung wird nachfolgend anhand der Zeichnung nähers erläutert.

Es zeigen:

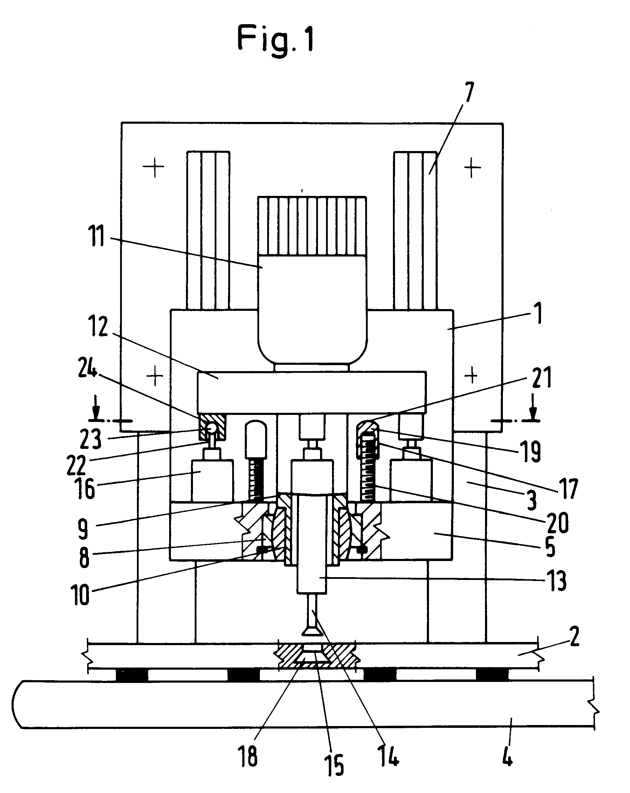

- Figur 1: den Gesamtaufbau der Vorrichtung in einer Frontansicht und
- Figur 2: eine Draufsicht auf die Halterung mit den auf ihr angeordneten Zylindern und Anschlägen.

Die Vorrichtung 1 zur Herstellung von Bohrlöchern mit Hinterschneidung in Fassadenplatten 2 ist in einem Ständer 3 integriert, der eine Auflage 4 - gegebenenfalls mit Spanneinrichtung - für die Fassadenplatte 2 aufweist. Für die Vertikalbewegung der Vorrichtung 1 sind an der Halterung 5 zwei Führungsschienen 6 angeordnet, die in am Ständer 3 befestigte Führungsprofile 7 eingreifen.

In der Halterung 5 befindet sich das Schwenklager, das durch eine Lagerbuchse 8 und einem auf der Führungshülse 9 angeordneten kugelförmigen Bund 10 gebildet ist. Die Führungshülse 9 ist fest mit der Bohrmaschine 11 und der kreisförmigen Taumelscheibe 12 verbunden. Im Bohrfutter der Bohrmaschine 11 ist der Adapter 13 eingespannt, in dessen die Führungshülse 9 überragenden Stirnende das mit Diamantsplitter bestückte Bohrwerkzeug 14 eingesteckt ist. Zum Bohren des Bohrloches 15 in der Fassadenplatte 2 wird die Vorrichtung 1 bei waagrecht stehender Taumelscheibe und eingeschalteter Bohrmaschine über ein Zahnstangengetriebe, Hebel oder dgl. (nicht dargestellt) nach unten bewegt und das zylindrische Bohrloch erstellt. Nach Erreichen der eingestellten Bohrlochtiefe wird bei laufender Bohrmaschine die Taumelscheibe 12 durch Ansteuern und Betätigen eines Zylinders 16 soweit in Schräglage gebracht, bis die Taumelscheibe auf den diesem Zylinder gegenüberliegenden Anschlägen 17 aufsitzt. Dabei wird die Achse der Bohrmaschine und des Bohrwerkzeuges entgegengesetzt um den Mittelpunkt des Schwenklagers ausgelenkt. Durch die nacheinander gesteuerte Betätigung der Zylinder 16 im oder gegen den Uhrzeigersinn entsteht eine Taumelbewegung, die zur Ausreibung der Hinterschneidung 18 des Bohrloches 15 führt. Nach ein oder zwei Umläufen wird die Taumelscheibe wieder in die waagrechte Lage gebracht und das Bohrwerkzeug aus dem Bohrloch ausgefahren.

Der Grad der Hinterschneidung ist durch die Anschläge 17 einstellbar. Durch mehr oder weniger starkes Aufdrehen der Gewindehülse 19 auf den Gewindebolzen 20 kann der Abstand der gerundeten Stirnseite 21 der Gewindehülse 19 gegenüber der Taumelscheibe 12 verstellt werden. Um beim Taumeln der Vorrichtung ein Verkanten der Zylinder mit der Taumelscheibe zu vermeiden, weist die Kolbenstange 22 des Zylinders 16 zur Bildung eines Pendellagers einen Kugelkopf 23 auf, der in einer zylindrischen Bohrung des Kupplungsstückes 24 eingreift.

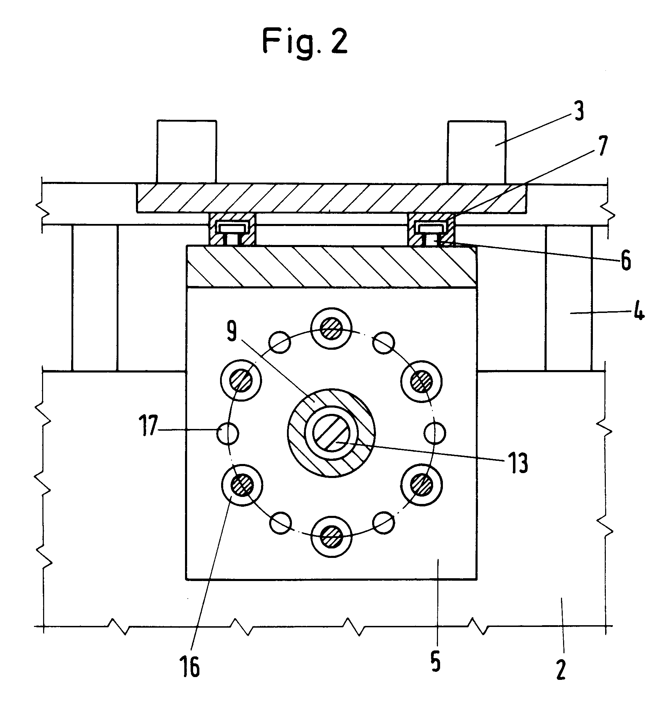

Um eine gleichförmige Taumelbewegung zu erreichen, sind - wie aus Figur 2 ersichtlich - auf der Halterung 5 konzentrisch um die Führungshülse 9 sechs Zylinder 16 angeordnet, die nacheinander im oder gegen den Uhrzeigersinn angesteuert werden. Auf dem gleichen Kreisdurchmesser, jeweils zwischen zwei Zylindern, sind ebenfalls sechs die Schräglage der Taumelscheibe 12 begrenzende Anschläge 17 aufgesetzt.

Zur Erzeugung der Taumelbewegung können Pneumatik- oder Hydraulikzylinder verwendet werden.

## Patentansprüche

1. Vorrichtung zur Herstellung von Bohrlöchern mit Hinterschneidung, insbesondere in Fassadenplatten, bestehend aus einem das Bohrwerkzeug (14) aufnehmenden und mit einer Bohrmaschine (11) drehmomentübertragend verbundenen Adapter (13), und einer in einer Halterung (5) eines Ständers (3) befestigten Lagerbuchse (8), in der eine mit der Bohrmaschine fest verbundene Führungshülse (9) über ein Schwenklager dreh- und verschwenkbar aufgenommen und gelagert ist, **dadurch gekennzeichnet,** daß an der Bohrmaschine (11) und Führungshülse (9) eine Taumelscheibe (12) befestigt ist, an der mehrere auf der Halterung (5) und konzentrisch um die Mittelachse der Führunghülse (9) angeordnete Zylinder (16) angreifen, und daß eine Maschinensteuerung vorgesehen ist, mit der zur Erzeugung der Taumelbewegung für das Ausreiben der Hinterschneidung (18) die Zylinder automatisch nacheinander ansteuerbar und betätigbar sind, so daß sich die Werkzeugachse kreisförmig um die Mittelachse bewegt.

2. Vorrichtung nach Anspruch 1, **dadurch gekennzeichnet,** daß die Kolbenstange (22) des Zylinders (16) über ein Pendelgelenk (23, 24) mit der Taumelscheibe verbunden ist.

3. Vorrichtung nach Anspruch 1, **dadurch gekennzeichnet**, daß wenigstens sechs Zylinder (16) konzentrisch und gleichmäßig verteilt um die Mittelachse der Führungshülse (9) angeordnet sind.

4. Vorrichtung nach Anspruch 1, **dadurch gekennzeichnet**, daß auf der Halterung (5) und konzentrisch um die Mittelachse der Führungshülse (9) mehrere vorzugsweise der Anzahl der Zylinder (16) entsprechende Anschläge (17) für die Taumelscheibe (12) angeordnet sind.

5. Vorrichtung nach Anspruch 4, **dadurch gekennzeichne**t, daß die Anschläge (17) durch einen Gewindebolzen (20) gebildet sind, auf den eine mit einer gerundeten Stirnseite (21) versehene Gewindehülse (19) aufgeschraubt ist.

## Claims

1. A device for producing drilled holes with an undercut, especially in facing panels, consisting of an adapter (13) receiving the drilling tool (14) and joined to a drilling machine (11) so as to transfer torque, and a bearing bush (8) secured in a holding means (5) of a supporting stand (3), in which bearing bush a guide sleeve (9) fixedly joined to the drilling machine is received and mounted so as to rotate and swivel by way of a swivel bearing, characterized in that on the drilling machine (11) and guide sleeve (9) there is secured a wobble plate (12) which is engaged by several cylinders (16) arranged on the holding means (5) and concentrically about the centre line of the guide sleeve (9), and a mechanised control is provided, with which the cylinders are arranged to be automatically actuated and controlled in succession, so that the tool axis moves in a circle about the centre line, to produce the wobbling movement for reaming out the undercut (18).

2. A device according to claim 1, characterized in that the piston rod (22) of the cylinder (16) is connected to the wobble plate by way of a pendulum joint (23, 24).

3. A device according to claim 1, characterized in that at least six cylinders (16) are arranged concentrically and uniformly distributed around the centre line of the guide sleeve (9).

4. A device according to claim 1, characterized in that several stops (17) for the wobble plate (12), preferably corresponding to the number of cylinders (16), are arranged on the holding means (5) and concentrically about the centre line of the guide sleeve (9).

5. A device according to claim 4, characterized in that the stops (17) are formed by a threaded bolt (20) onto which a threaded sleeve (19) provided with a rounded front end (21) is screwed.

## Revendications

1. Dispositif pour percer, en particulier dans des panneaux de façades, des trous pourvus d'un élargissement intérieur, notamment dans la zone du fond du trou, comprenant un adaptateur (13) recevant l'outil de perçage (14) et relié à une perceuse (11) par une liaison capable de transmettre un couple, ainsi qu'un coussinet (8), fixé dans une monture (5) d'un montant (3), dans lequel un manchon de guidage (9), relié rigidement à la perceuse, est reçu par l'intermédiaire d'un palier d'inclinaison, de manière que le manchon puisse tourner et être incliné, **caractérisé en ce** qu'un plateau oscillant (12) est fixé à la perceuse (11) et au manchon de guidage (9), plateau qui est attaqué par plusieurs vérins (16) disposés sur la monture (5), concentriquement autour de l'axe central du manchon de guidage (9), et en ce qu'une commande de machine est prévue, par laquelle, afin de produire un mouvement de nutation en vue du creusement de l'élargissement (18), les vérins peuvent automatiquement être commandés et étendus l'un après l'autre, de sorte que l'axe de l'outil effectue un mouvement circulaire autour de l'axe central.

2. Dispositif selon la revendication 1, caractérisé en ce que la tige de piston (22) de chaque vérin (16) est reliée au plateau oscillant par l'intermédiaire d'une articulation à pendule (23, 24).

3. Dispositif selon la revendication 1, caractérisé en ce qu'au moins six vérins (16) sont disposés concentriquement et de façon uniformément répartie autour de l'axe central du manchon de guidage (9).

4. Dispositif selon la revendication 1, caractérisé en ce que plusieurs butées (17) pour le plateau oscillant (12), butées dont le nombre correspond de préférence au nombre des vérins (16), sont disposées concentriquement autour de l'axe central du manchon de guidage (9) sur la monture (5).

5. Dispositif selon la revendication 4, caractérisé en ce que les butées (17) sont constituées par une tige filetée (20), sur laquelle est vissée une douille filetée (19) pourvue d'une extrémité arrondie (21).
